# EUROPÄISCHE PATENTSCHRIFT

(11) **EP 0 853 734 B1**
(45) Veröffentlichungstag und Bekanntmachung des Hinweises auf die Patenterteilung: **04.10.2001**
(21) Anmeldenummer: 97935434.7
(22) Anmeldetag: 11.07.1997
(51) Int. Cl.: F16C 33/08

(54) **LAGERSCHALE MIT HALTENOCKEN UND VERFAHREN ZU SEINER HERSTELLUNG**
BEARING SHELL WITH RETAINING CAM AND METHOD FOR PRODUCTION THEREOF
COUSSINET AVEC CAME DE RETENUE ET PROCEDE DE FABRICATION CORRESPONDANT

(30) Priorität: 06.08.1996 DE 19631663
(43) Veröffentlichungstag der Anmeldung: 22.07.1998
(73) Patentinhaber: Federal-Mogul Wiesbaden GmbH & Co.KG, 65201 Wiesbaden (DE)
(72) Erfinder: LEHMANN, Uwe, D-55286 Wörrstadt (DE); LILL, Michael, D-65197 Wiesbaden (DE)
(86) Internationale Anmeldenummer: DE9701508
(87) Internationale Veröffentlichungsnummer: WO9805878

(56) Entgegenhaltungen:
- DE-A- 3 230 700
- DE-B- 1 477 052
- US-A- 2 124 060

## Beschreibung

Die Erfindung betrifft eine Lagerschale mit mindestens einem Haltenocken, der eine in Draufsicht auf die Teilfläche der Lagerschale rechteckige Außenkontur und an der Innenseite der Lagerschale eine Veltiefung aufweist. Die Erfindung bezieht sich auch auf ein Verfahren zur Herstellung von Nocken in Lagerschalen durch Auswärtsdrücken eines kleinen Abschnitts der Lagerschalenwand im Bereich der Teilfläche in eine rechteckige Matrize, wobei an der Innenseite der Lagerschale durch das Auswärtsdrücken eine Vertiefung ezeugt wird.

Haltenocken an Lagerschalen haben die Aufgabe, den Einbau der Lagerschale zu erleichtern, indem sie die Einbaulage im Lagergehäuse im Zusammenwirken mit einer dort vorgesehenen Ausnehmung definieren. Solche Lagerschalen bzw. Verfahren der obergenannten Art, wie sie beispielsweise aus der DE-AS 1477052 bekanntgeworden sind, beritzen bzw. Führen zu Haltenocken 3, wie sie in der Figur 1 dargestellt sind die in Draufsicht auf die Teilfläche 2 der Lagerschale 1 eine rechteckige Außenkontur und eine rechteckige Innenkontur aufweise. Der Haltenocken 3 ist dafür vorgesehen, sich beim Einsetzen in die Bohrung des Lagergehäuses 4 in die Ausfräsung 5 zu legen. Die Teilfläche 2 liegt dann im Bereich des Haltenockens 3 in der Ebene der Teilfläche 6 des Lagergehäuses und stützt sich dann an der geschlossenen Trennfläche der zweiten Gehäusehälfte ab. Hierdurch wird nicht nur die Einbaulage festgelegt sondern auch das Verdrehen der Lagerschale innerhalb der Gehäusebohrung im Betrieb verhindert.

Die Haltenocken 3 können mittels eines Messers geschlagen oder, wie in der DE-AS 1477052 beschrieben wird, im Spalt eines Walzenpaares hergestellt werden. Nachteilig bei allen bekannten Haltenocken ist jedoch der geringe Übergangsbereich 7a,b zwischen dem Nocken 3 und der benachbarten Lagerwandung. Unter dem Übergangsbereich wird der Bereich zwischen dem Nockengrund 8a,b und der Vertiefung 9 verstanden. Meistens ist in diesem Bereich das Material der Lagerschale eingerissen oder sogar abgeschert, so daß es dort im Betrieb zu Materialablösungen kommen kann. Um dies zu vermeiden, wurde in manchen Fällen die Innenseite der Lagerschale im Bereich der Vertiefung 9 freigefräst. Bei hochbelasteten Lagern kann der Nocken wegen der nur geringen Verbindung zur übrigen Lagerschale im oberen Bereich u.U. unter Einwirkung der im Betrieb auftretenden Kräfte und Schwingungen abreißen.

Es wurden daher bereits stiftförmige Erhöhungen im Lagergehäuse vorgeschlagen, die in entsprechende Bohrungen in der Lagerschale eingreifen. Dies wird beispielsweise im Prospekt der Firma Clevite "Mechanics Engine Bearing Reference Manual, First Edition, 1954" beschrieben. Diese Lösung ist allerdings nur bei Lagergehäusen möglich, die über eine entsprechend dicke Wandung verfügen.

Aus der US-A-2,124,060 ist ein Haltenocken mit runder Innen- und Außenkontur bekannt, der allerdings nur geringfügig nach außen vorsteht, so daß er seine Funktion als Verdrehsicherung nicht zufriedenstellend erfüllen kann. Bei der Herstellung runder Nocken, die ausreichend weit nach außen vorstehen, hat sich herausgestellt, daß die Nennbreite, die durch die Ausfräsung im Lagergehäuse vorgegeben ist, aufgrund von sanft verlaufenden Übergangsbereichen nicht eingehalten werden kann. Dadurch ist eine saubere Anlage der Lagerschale an das Gehäuse und eine exakte axiale Positionierung und Fixierung nicht möglich.

Diese Nachteile lassen sich vermeiden, wenn der Nocken nur im Bereich des Lagerrückens hergestellt wird, um auf diese Weise die Lauffläche nicht zu beeinträchtigen. Aus der DE 3230700 C2 sind sogenannte Stauchnocken bekannt, wobei durch Ausübung eines senkrecht auf einen radial äußeren und axial begrenzten Bereich der Teilfläche gerichteten Drucks bei entsprechendem Gegenhalten an der Lagerinnenfläche Material radial nach außen verdrängt wird. Zwischen der durch Materialverdrängung entstandenen Vertiefung und der Innenfläche bleibt ein tragender Materialstreifen stehen. Dieses Verfahren ist allerdings nur bei dicken Lagerschalen mit Wanddicken > 2mm einsetzbar.

Da die Entwicklung im Motorenbau zu dünnwandigeren, d.h. leichteren Lagergehäusen und auch dünneren Lagerschalen geht, die zudem immer höheren Belastungen, im Rennsport z.B. Drehzahlen bis zu 17000 U/min, ausgesetzt sind, wird nach Alternativen zu den bekannten Lösungen gesucht.

Die Aufgabe der vorliegenden Erfindung besteht deshalb darin, eine Lagerschale zu schaffen, deren Haltenocken eine größere Stabilität aufweisen. Es ist auch Aufgabe der Erfindung, ein Verfahren bereitzustellen, mit dem Haltenocken hergestellt werden können, die stabiler sind und eventuell, z.B. abhängig vom Fließverhalten des vorliegenden Lagerverbundmaterials, keine Nachbearbeitung an der Innenseite der Lagerschale erforderlich machen.

Diese Aufgabe wird mit einer Lagerschale gemäß des Patentanspruchs 1 gelöst. Das Herstellungverfahren ist Gegenstand des Patentanspruchs 5. Vorteilhafte Ausgestaltungen werden in den Unteransprüchen beschrieben.

Die Erfindung besteht darin, daß eine rechteckige Außenkontur des Nockens mit einer Innenkontur kombiniert wird, die im Gegensatz zum Stand der Technik nicht ebenfalls rechteckig ist, sondern einen solchen Verlauf besitzt, daß die Vertiefung in der Nockenmitte am größten ist. Hierbei ist ein Konturenverlauf bevorzugt, bei dem die Vertiefung vom Rand zur Nockenmitte M kontinuierlich zunimmt.

Die rechteckige Außenkontur bietet den Vorteil, daß für die Herstellung vorhandene Matrizen verwendet werden können und daß vor allem eine saubere axiale Positionierung und Fixierung im Lagergehäuse sowie in speziellen Fällen, z.B. bei Rennmotoren, eine Verdrehsicherung durch die genügend große Anlagefläche des Nockens gewährleistet wird. Die erfindungsgemäße Innenkontur stellt sicher, daß ein großer und insbesondere unbeschädigter Übergangsbereich vorhanden ist, der die Stabilität des Nockens auch bei hohen Belastungen gewährleistet. Die Tiefe der Vertiefung in der Nockenmitte kann größer sein als bei herkömmlichen Nocken, was jedoch insofern nicht nachteilig ist, als die Belastung des Nockens nicht in der Mitte, sondern im Randbereich am größten ist, wo ein entsprechend großer Übergangsbereich vorhanden bleibt. Diese Ausgestaltung des Haltenockens ist somit auch insbesondere bei dünnen Lagerschalen möglich, deren Wandstärke < 2 mm beträgt.

Vorzugsweise nimmt die Vertiefung von ihrem Rand zur Nockenmitte kontinuierlich zu. Die Vertiefung kann im Prinzip eine beliebige Kontur besitzen, und z.B. auch dreieckig sein. Bevorzugt ist jedoch eine runde Kontur, die vorteilhafterweise kreisbogenförmig ist.

Die Vertiefung kann auch einen runden Abschnitt und seitliche gerade Abschnitte aufweisen. Die seitlichen Abschnitte erstrecken sich in diesem Fall nicht über die halbe Lagerschalenwanddicke, so daß ein ausreichend großer Übergangsbereich verbleibt.

Vorzugsweise entspricht die Breite B_{V} der Vertiefung annähernd der Breite B_{N} des Nockens.

Das Verfahren zur Herstellung von Haltenocken sieht vor, daß durch das Auswärtsdrücken eine Vertiefung erzeugt wird, die im Bereich der Nockenmitte am größten ist. Die Materialverdrängung ist somit im Randbereich der Vertiefung am geringsten, so daß es nicht zu einem Abreißen des Haltenockens kommen kann. Ablösungen des Lagermaterials treten somit, abhängig vom Fließverhalten des vorliegenden Lagerverbundmaterials, gar nicht oder nur eingeschränkt auf, so daß eine Nachbearbeitung, d.h. ein Ausfräsen und Abtragen des Lagermaterials nicht erforderlich ist. Dieses Verfahren ist materialschonend, wobei gleichzeitig ein stabiler Nocken erzeugt wird, der hohen Belastungen im Betrieb standhält.

Vorzugsweise wird das Auswärtsdrücken mittels eines runden Messers durchgeführt.

Die Vertiefung kann geschlagen oder geprägt werden.

Beispielhafte Ausführungsformen der Erfindung werden nachfolgend anhand der Zeichnungen näher erläutert.

Es zeigen:

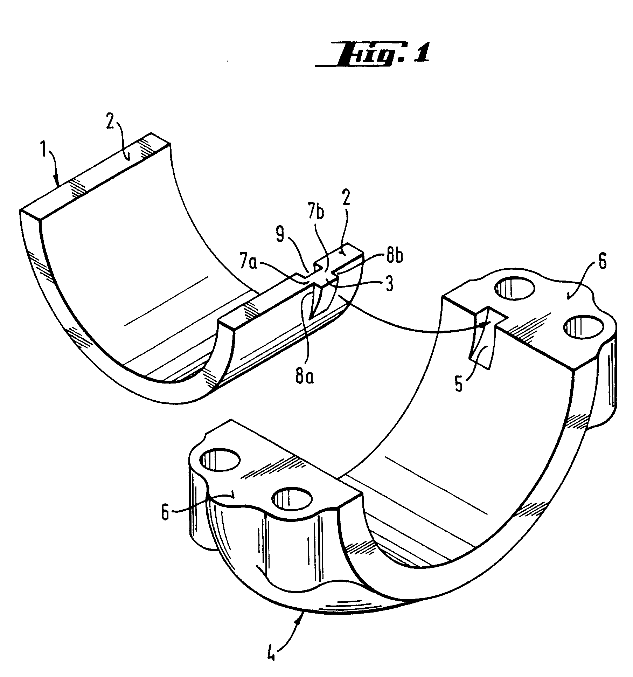

- Fig. 1: eine Gleitlagerschale mit Haltenocken und ein Lagergehäuse mit Aasfräsung in schematischer perspektivischer Teildarstellung nach dem Stand der Technik,
- Fig. 2: eine erfindungsgemäße Lagerschale in perspektivischer Darstellung und
- Fig. 3: eine Draufsicht auf die Teilfläche der in Fig. 2 gezeigten Lagerschale.

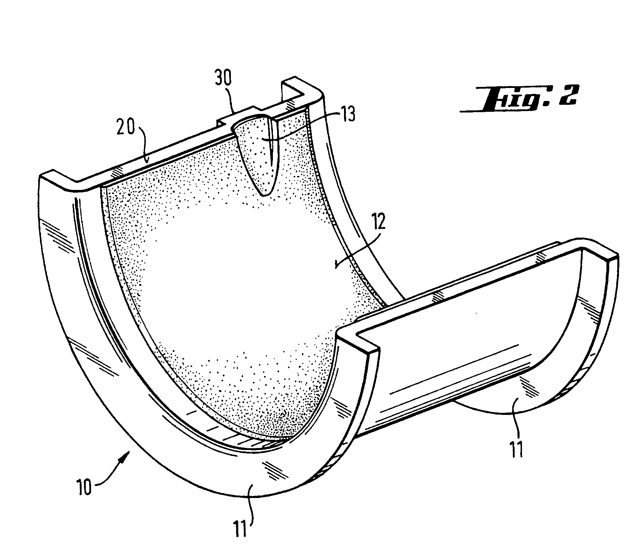

In der Fig. 2 ist eine Lagerschale 10 dargestellt, die einen Haltenocken 30 aufweist, der eine rechteckige Außenkontur und eine Vertiefung 13 mit runder Kontur aufweist. Dargestellt ist die erfindungsgemäße Ausführungsform an einem Lager mit Anlaufbunden 11 (Paßlager). Die Erfindung bezieht sich selbstverständlich auch auf Lagerschalen ohne Anlaufbunde (Glattlager).

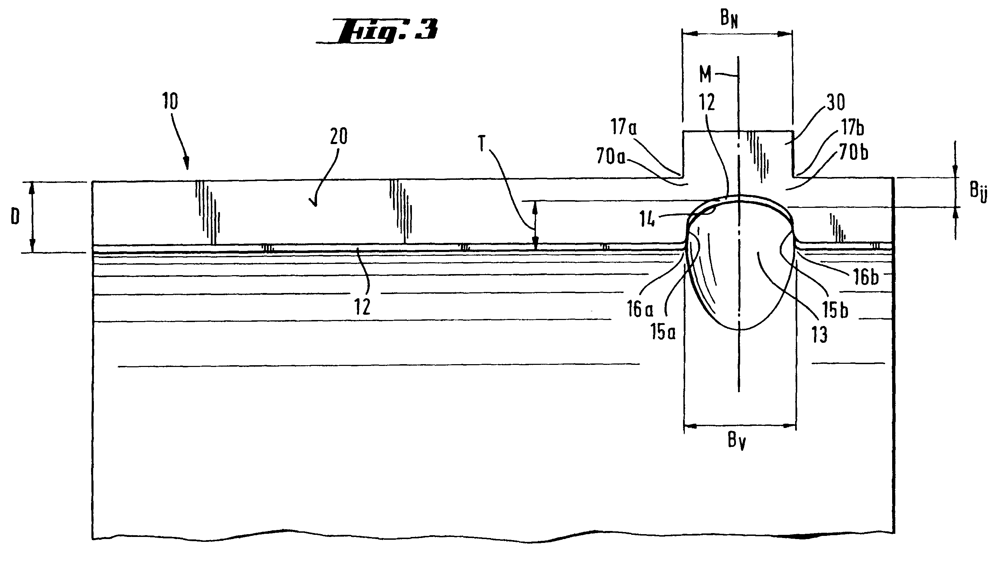

In der Fig. 3 ist die Draufsicht auf die Teilfläche 20 der Lagerschale 10 in vergrößerter Darstellung gezeigt. Der Haltenocken 30 besitzt eine Breite B_{N}, die mit der Breite B_{V} der Vertiefung 13 annähernd übereinstimmt. Die Vertiefung 13 besitzt gerade seitliche Abschnitte 15a,b, die sich vom Rand 16a,b bis an den runden Abschnitt 14 erstrecken. Die Vertiefung 13 besitzt ihre maximale Tiefe T im Bereich der Nockenmitte M. Die Breite B_{Ü} des Übergangsbereiches 70a,b, die sich vom Nockengrund 17a,17b bis zur Vertiefung 13 erstreckt, entspricht in der hier gezeigten Darstellung weniger als der halben Lagerwanddicke D. Die Breite des Übergangsbereichs kann je nach Ausführung aber auch deutlich größer sein.

Bei der Herstellung der Lagernocken, die mit einem runden Messer durchgeführt werden kann, wird der Stahlrücken in eine entsprechende Matrize mit rechteckiger Kontur gedrückt. Hierbei wird die Gleitlagerschicht 12 schonend nach außen gedrückt, wobei dieses Material lediglich den runden Abschnitt 14 der Vertiefung auskleidet. Im Bereich der seitlichen Abschnitte 15a,15b weist die Gleitlagerschicht 12 eine Unterbrechung auf.

### Bezugszeichenliste:

- 1: Lagerschale
- 2: Teilfläche
- 3: Haltenocken
- 4: Lagergehäuse
- 5: Ausfräsung
- 6: Trennfläche
- 7a,b: Übergangsbereich
- 8: Nockengrund
- 9: Vertiefung
- 10: Lagerschale
- 11: Anlaufbund
- 12: Gleitlagerschicht
- 13: Vertiefung
- 14: runder Abschnitt
- 15a,b: gerader Abschnitt
- 16a,b: Rand
- 17a,b: Nockengrund
- 20: Teilfläche
- 30: Haltenocken
- 70a,b: Übergangsbereich

## Patentansprüche

1. Lagerschale (10) mit mindestens einem Haltenocken (30), der eine in Draufsicht auf die Teilfläche der Lagerschale (10) rechteckige Außenkontur und an der Innenseite der Lagerschale (10) eine Vertiefung (13) aufweist,
**dadurch gekennzeichnet**,
und
daß die Vertiefung (13) von ihrem Rand (16a,b) zur Nockenmitte (M) kontinuierlich zunimmt
daß die Vertiefung (13) im Bereich der Nockenmitte (M) am größten ist.

2. Lagerschale nach Anspruch 1, **dadurch gekennzeichnet, daß** die Vertiefung (13) eine in Draufsicht auf die Teilfläche (20) runde Kontur aufweist.

3. Lagerschale nach einem der Ansprüche 1 oder 2, **dadurch gekennzeichnet, daß** die Vertiefung (13) einen runden Abschnitt (14) und seitliche gerade Abschnitte (15a,b) aufweist.

4. Lagerschale nach einem der Ansprüche 1 bis 3, **dadurch gekennzeichnet, daß** die Breite (B_{V}) der Vertiefung (13) der Breite (B_{N}) des Nockens (30) entspricht.

5. Verfahren zur Herstellung von Haltenocken (30) in Lagerschalen (10) durch Auswärtsdrücken eines kleinen Abschnitts der Lagerschalenwand im Bereich der Teilfläche in eine rechteckige Matrize, wobei an der Innenseite der Lagerschale (10) durch das Auswärtsdrücken eine Vertiefung (13) erzeugt wird,
**dadurch gekennzeichnet,**
**daß** die Vertiefung (13) von ihrem Rand zur Nockenmitte kontinuierlich zunimmt.

6. Verfahren nach Anspruch 5, **dadurch gekennzeichnet, daß** das Auswärtsdrücken mittels eines runden Messers durchgeführt wird.

7. Verfahren nach Anspruch 5 oder 6, **dadurch gekennzeichnet, daß** die Vertiefung geschlagen oder geprägt wird.

## Claims

1. A bearing shell (10) having at least one holding projection (30) which is of an external contour that is rectangular in plan view on to the separation surface of the bearing shell (10), and which has a recess (13) at the inside of the bearing shell (10),
**characterised in that**
the recess (13) continuously increases from its edge (16a, b) to the projection centre (M) and
the recess (13) is at its greatest in the region of the projection centre (M).

2. A bearing shell according to claim 1 **characterised in that** the recess (13) is of a contour that is round in a plan view on to the separation surface (20).

3. A bearing shell according to one of claims 1 and 2 **characterised in that** the recess (13) has a round portion (14) and lateral straight portions (15a, 15b).

4. A bearing shell according to one of claims 1 to 3 **characterised in that** the width (B_{V}) of the recess (13) corresponds to the width (B_{N}) of the projection (30).

5. A process for producing holding projections (30) in bearing shells (10) by outwardly pressing a small portion of the bearing shell wall in the region of the separation surface into a rectangular die, wherein a recess (13) is produced at the inside of the bearing shell (10) by the outward pressing step,
**characterised in that** the recess (13) continuously increases from its edge to the projection centre.

6. A process according to claim 5 **characterised in that** the outward pressing step is effected by means of a round blade.

7. A process according to claim 5 or claim 6 **characterised in that** the recess is struck or impressed.

## Revendications

1. Coussinet (10) comprenant au moins un mentonnet de retenue (30) qui présente un contour rectangulaire en regardant la partie de surface du coussinet (10) par le dessus, et un renfoncement (13) sur la face intérieure du coussinet (10), **caractérisé en ce que** le renfoncement (13) augmente progressivement à partir de son bord (16a, b) vers le milieu du mentonnet (M) et **en ce que** le renfoncement (13) est le plus grand dans la zone du milieu du mentonnet (M).

2. Coussinet selon la revendication 1, **caractérisé en ce que** le renfoncement (13) présente un contour arrondi en regardant la partie de surface (20) du coussinet par le dessus.

3. Coussinet selon la revendication 1 ou 2, **caractérisé en ce que** le renfoncement (13) présente un segment arrondi (14) et des segments latéraux rectilignes (15a, b).

4. Coussinet selon l'une des revendications 1 à 3, **caractérisé en ce que** la largeur (Bᵥ) du renfoncement (13) correspond à la largeur (Bₙ) du mentonnet (30).

5. Procédé pour réaliser des mentonnets de retenue (30) dans des coussinets (10) en poussant vers l'extérieur une petite partie de la paroi du coussinet dans la zone de la partie de surface dans une matrice rectangulaire, sachant qu'un renfoncement (13) est formé sur la surface intérieure du coussinet (10) par la poussée vers l'extérieur, **caractérisé en ce que** le renfoncement (13) augmente progressivement depuis son bord vers le milieu du mentonnet.

6. Procédé selon la revendication 5, **caractérisé en ce que** la poussée vers l'extérieur est réalisée au moyen d'un couteau rond.

7. Procédé selon la revendication 5 ou 6, **caractérisé en ce que** le renfoncement est frappé ou matricé.
